# EUROPÄISCHE PATENTSCHRIFT

(11) **EP 1 273 675 B1**
(45) Veröffentlichungstag und Bekanntmachung des Hinweises auf die Patenterteilung: **15.07.2009**
(21) Anmeldenummer: 02405373.8
(22) Anmeldetag: 07.05.2002
(51) Int. Cl.: C23C 4/18, C23C 2/00, C23C 24/00, C23C 4/00

(54) **Verfahren zur Herstellung einer räumlich geformten, folienartig ausgebildeten Trägerschicht aus sprödhartem Material**
Method of manufacturing a spaced formed, foil shaped support layer of brittle material
Procédé de fabrication d'une couche de support formée de feuille spatiale en matériau cassant

(30) Priorität: 28.06.2001 DE 10131362
(43) Veröffentlichungstag der Anmeldung: 08.01.2003
(73) Patentinhaber: Alstom Technology Ltd, 5400 Baden (CH)
(72) Erfinder: Fried, Reinhard, 5415 Nussbaumen (CH); Goecmen, Alkan, Dr., 5405 Baden-Dättwil (CH)

(56) Entgegenhaltungen:
- EP-A- 0 358 801
- EP-A- 0 897 020
- EP-A- 1 091 020
- WO-A-97/18074
- DE-A- 4 225 779
- DE-A- 19 730 732
- US-A- 2 942 970
- US-A- 3 196 089
- US-A- 3 490 116
- US-A- 4 418 124
- US-A- 4 447 466
- PATENT ABSTRACTS OF JAPAN Bd. 0131, Nr. 11 (C-577), 16. März 1989 (1989-03-16) & JP 63 286563 A (YAMAKI KOGYO KK), 24. November 1988 (1988-11-24)

## Beschreibung

### Technisches Gebiet

Die Erfindung bezieht sich auf Verfahren zur Herstellung einer als Abriebelement ausgebildeten Struktur zur Reduzierung eines Leckagespaltes zwischen einer rotierenden Schaufelspitze und einem der Schaufelspitze unmittelbar gegenüberliegenden Statorgehäuse innerhalb einer Gasturbinenanlage, die aus einer räumlich geformten, folienartig ausgebildeten und aus sprödhartem Material bestehenden Trägerschicht (3) gebildet wird.

### Stand der Technik

Trägerschichten der vorstehend genannten Gattung, die aus sprödhartem Material bestehen, spielen im Einsatz axial durchströmter Strömungskraftmaschinen, beispielsweise bei Gasturbinenanlagen, eine zunehmend wichtige Rolle. Die weiteren Ausführungen beziehen sich auf den Einsatz vorstehend genannter Trägerschichten in der Gasturbinentechnik, doch soll dieses Anwendungsgebiet den technologischen Wert noch die vielseitige Einsetzbarkeit einer derartigen Trägerschicht nicht beschränken.

Die Steigerung des Wirkungsgrades einer axial durchströmten Strömungskraftmaschine ist unter anderem durch die konsequente Reduzierung von innerhalb der Strömungskraftmaschine auftretenden Verlustmechanismen realisierbar. Ein entscheidender Verlustmechanismus bilden sogenannte Leckageströme, die zwischen den Rotorspitzen und dem die Rotoranordnung umgebenden Statorgehäuse auftreten. Gleichgültig ob es sich bei der axial durchströmten Strömungskraftmaschine um eine Verdichter- oder Gasturbine handelt, gilt es in besonderem Maße darauf zu achten, dass der Spaltzwischenraum zwischen den rotierenden Schaufelspitzen und dem unmittelbar den rotierenden Schaufelspitzen gegenüberliegenden Statorgehäuse so gering wie nur möglich einzustellen. Um einerseits vorstehender Forderung gerecht zu werden, andererseits jedoch einen Freilauf der Rotoranordnung innerhalb des Statorgehäuses zu gewährleisten, sind an den meist mit Deckbändern versehenen Turbinenschaufeln radial nach außen orientierte Dichtelemente angebracht, die als Abriebelemente ausgebildet sind und nach einer entsprechenden Einlauf- bzw. Abriebzeit einen optimierten engsten Zwischenspalt mit dem Statorgehäuse einschließen, durch den die unvermeidbar auftretenden Leckageströme auf ein Minimum reduziert werden. Derartige Abriebelemente weisen in an sich bekannter Weise eine sogenannte Honigwabenstruktur auf, die aus dünnen Blechen hergestellt ist und am Außenumfang der Deckbänder von Turbinenschaufeln angebracht sind.

Zur Herstellung derartiger Honigwabenstrukturen werden die Bleche nach bekannten Methoden wie Walzen, Ziehen, Strecken, Kalibrieren etc. hergestellt. Mit Hilfe derartig bekannter Bearbeitungsmethoden werden die Bleche nach gewünschter Ablängung geschnitten und zu den bekannten Zick-Zack-förmigen Streifen geformt, die entsprechend zusammengeheftet die bekannten Honigwabenstrukturen ergeben. Das Zusammenheften bzw. Verfügen der einzelnen Zick-Zack-förmigen Streifen zu einer dreidimensionalen Honigwabenstruktur erfolgt mit Hilfe an sich bekannter Fügetechniken wie Löten oder Schweißen.

Die für die Bleche verwandten Materialien sind in der Regel Nickelbasis-, Kobaltbasis- oder Eisenbasis-Legierungen, die zur Herstellung eine zur Verformung notwendige Duktilität aufweisen. Derartige, aus den vorstehenden Legierungsgruppen gebildete Honigwabenstrukturen verfügen jedoch nur über eine begrenzte thermische Belastbarkeit bzw. Oxidationsfestigkeit, so dass sie als Dichtelemente in einer Gasturbine lediglich bei Temperaturen von maximal 1000° C über längere Zeit einsetzbar sind. Moderne Gasturbinenanlagen mit einem optimierten Wirkungsgrad werden jedoch bei Temperaturen betrieben, die deutlich über 1000° C liegen, so dass die Dichtelemente aus den vorstehend genannten Materialien über nur eine unwirtschaftlich geringe Lebensdauer verfügen und somit unbrauchbar sind.

Zwar sind Materialverbindungen bekannt, die über eine weitaus höhere Temperaturbeständigkeit verfügen und vielfach Eingang, insbesondere in der Gasturbinentechnik gefunden haben, beispielsweise oxidationsbeständige MCrAlY-Materialien, die über eine Temperatur- und Oxidationsfestigkeit bei Temperaturen weit über 1000° C verfügen. Derartige Metallchromaluminiumytrium-Legierungen, wobei als Metalle Nickel, Kobalt oder Eisen verwendbar sind, weisen jedoch eine überaus große Sprödigkeit auf, so dass sie mit den eingangs erwähnten bekannten Umformprozessen, wie Walzen oder Ziehen etc., nicht bearbeitet werden können.

Der US 4,063,742 ist ein Abriebelement vorzugsweise für Strahltriebwerke von Flugzeugen zu entnehmen, das auf Basis einer Stahl-, Nickel- oder Cobalt-Legierung zur Bildung einer Honigwabenstruktur besteht, die zur Leckagestromreduzierung zwischen den rotierenden Schaufelspitzen und stationären Gehäuseteilen vorgesehen werden.

Die US 3,867,061 beschreibt ein Abriebelement in Form einer Honigwabenstruktur mit unterschiedlich hoch ausgebildeten Wabenwänden, wodurch eine reduzierte Steifigkeit und somit ein verbessertes Abriebverhalten erhalten wird. Auch in diesem fall wird auf die Verwendung konventioneller Legierungen zur Ausbildung der Abriebelemente zurückgegriffen.

Die US 5,096,376 beschreibt eine gattungsgemäße Honigwabenstruktur, gleichfalls bestehend aus einer konventionellen Metalllegierung, vorzugsweise aus Hastelloy-X, zu deren Herstellung, Honigwabenhalbfertigteile miteinander verschweißt werden.

Aus der DE 4225779 A1 ist ein Formkörper sowie dessen Herstellung beschrieben, der zu Zwecken des Einsatzes in einer Hochtemperatur-Brennstoffzelle als bipolare Platte speziell ausgebildet ist. Dieser Formkörper wird zur Zwecken seiner räumlichen Ausbildung schichtartig hergestellt, wozu eine vorgeformte Werkzeugoberfläche dient, auf die der Formkörper schichtbildend aufgebracht wird. Nach Verfestigen des Schichtmaterials wird dieses von der Werkzeugoberfläche getrennt.

### Darstellung der Erfindung

Es besteht daher die Aufgabe, ein Verfahren zur Herstellung einer räumlich geformten, folienartig ausgebildeten Trägerschicht aus sprödhartem Material, vorzugsweise MCrAIY-Materialien, anzugeben, das technisch und wirtschaftlich realisierbar ist. Insbesondere soll die mit dem Verfahren hergestellte Trägerschicht in Form einer dreidimensionalen Struktur, vorzugsweise einer Honigwabenstruktur, für den Einsatz als Dichtelement in einer axial durchströmten Strömungskraftmaschine verwendbar sein. Hierbei gilt es insbesondere, dass das mit dem Verfahren hergestellte Dichtelement eine Temperaturbeständigkeit aufweist, bei der das Dichtelement Temperaturen von weit über 1000° C, vorzugsweise 1200° C, schadlos überstehen soll.

Die Lösung der der Erfindung zugrundeliegenden Aufgabe ist im Anspruch 1 angegeben. Bevorzugte Ausführungen sind in abhängigen Ansprüchen zu finden.

Erfindungsgemäß setzt sich das Verfahren zur Herstellung einer räumlich geformten, folienartig ausgebildeten Trägerschicht aus sprödhartem Material aus folgenden Verfahrensschritten zusammen:

Zunächst ist eine Grundform mit einer räumlich geformten Oberfläche vorzusehen, die über eine Oberflächenstruktur verfügt, die letztlich die herzustellende, aus sprödhartem Material bestehende Trägerschicht annehmen soll. In einem nächsten Schritt wird das in Gas- oder Flüssigphase vorliegende sprödharte Material mittels geeigneter Abscheidetechniken auf der strukturierten Oberfläche der Grundform abgeschieden. Hierfür geeignete Abscheideverfahren stellen das Flammspritzen oder thermische Spritzen bzw. Luftspritzen dar, bei dem das abzuscheidende Material zunächst in Pulver- oder Granulatform vorliegt, erhitzt wird und in Tropfenform mittels eines heissen Gas- oder Luftstrahls, der bei Temperaturen zwischen 400 und 3000° C bei hoher Geschwindigkeit auf die strukturierte Oberfläche der Grundform gerichtet ist, auf der Oberfläche der Grundform abgeschieden wird.
Das tröpfchenweise auf die Oberfläche der Grundform abgeschiedene Material kühlt an der Oberfläche ab und erstarrt in Form einer die strukturierte Oberfläche flächig abdeckenden Schicht. Je nach Abscheidungsdauer lassen sich beliebig dicke Schichtdicken erzeugen.

Selbstverständlich ist es möglich, den Abscheideprozess mit unterschiedlichen Materialien durchzuführen, d.h. die auf diese Weise herstellbare Trägerschicht kann eine Art Sandwich-Struktur aufweisen, mit einer Schichtabfolge bestehend aus unterschiedlichen Materialzusammensetzungen bzw. Materialbeschaffenheiten hinsichtlich Porosität oder Sprödigkeit.

Nach erfolgten Materialabscheiden auf der strukturierten Oberfläche der Grundform und Erkalten der abgeschiedenen Materialschicht wird diese von der Grundform getrennt und stellt bereits die räumlich geformte, folienartig ausgebildete Trägerschicht dar. Um den Abtrennvorgang der Trägerschicht von der Oberfläche der Grundform zu erleichtern, kann zwischen der Oberfläche der Grundform und der Trägerschicht eine geeignete Trennschicht vorgesehen werden. Ebenso können die Abscheideparameter für den Beschichtungsvorgang derart gewählt werden, dass eine erste Lage des abgeschiedenen Materials nur über eine geringe Bindung zur Oberfläche der Grundform aufweist.

Je nach räumlicher Gestaltung der Oberfläche der Grundform lassen sich nahezu beliebig geformte, folienartig ausgebildete Trägerschichten aus sprödhartem Material, vorzugsweise MCrAIY herstellen.

Zur Herstellung einer dreidimensionalen Honigwabenstruktur bedarf es einer Grundform, deren Oberfläche der Oberflächenkontur einer symmetrisch halbierten Honigwabenstruktur entspricht. Durch Zusammenfügen zweier derartig geformter Trägerschichten bzw. einer Vielzahl derartig gleichartig geformter Trägerschichten ist die Herstellung einer nahezu beliebig großen dreidimensionalen Honigwabenstruktur möglich. Die Verbindung der jeweiligen in Halbformen einer Honigwabenstruktur vorliegenden Trägerschichten miteinander erfolgt vorzugsweise mittels Punktschweißen bzw. mittels geeigneter Löttechniken.

Alternativ zum vorstehend beschriebenen Abscheideverfahren mittels Flammspritzen oder thermischen Spritzen bzw. Luftspritzen ist eine Materialabscheidung ebenfalls mittels galvanischer Abscheidetechnik innerhalb eines Galvanikbades unter Verwendung materialspezifischer Elektroden möglich, durch die eine gezielte Materialabscheidung auf der Grundform vorgenommen werden kann.

Darüber hinaus bietet die Sintertechnik oder das sogenannte Brazecoating die Herstellung der gewünschten Trägerschicht, indem auf der Grundform pulverisiertes MCrAIY, vermischt mit einem Bindemittel aufgetragen wird, das anschließend in einem oder mehreren Ofenprozessen zu einer räumlich geformten Trägerschicht gesintert oder verschmolzen wird.

Schließlich ermöglicht die an sich bekannte Technik des sogenannten "Meltspinning" ebenfalls die Herstellung vorstehend beschriebener Trägerschicht aus sprödhartem Material. Hierbei wird das sprödharte Material verflüssigt und mittels einer geeignet ausgebildeten Austragsdüse in Form eines flüssigen, flächig aufgeweiteten Materialstrahls auf eine rotierende, gekühlte Strukturwalze aufgebracht, durch die das verflüssigte Material bei Kontakt mit der Walzenoberfläche erkaltet und erstarrt. Durch die Rotation der Strukturwalze schält sich das erkaltete und zu einer Schicht erstarrte Material von der Oberfläche der Strukturwalzer ab und bildet die gewünschte Trägerschicht. Das Verfahren erlaubt eine kontinuierliche Herstellung der Trägerschicht als Meterware. Durch die Formgebung der Strukturwalze wird die Trägerschicht automatisch geformt. Um beim Beispiel der Herstellung einer Honigwabenstruktur zu bleiben, ist hierzu die Oberfläche der Strukturwalze in Form einer halben Honigwabenstruktur geformt.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a-c: Schematisierte Darstellung zur Herstellung der Trägerschicht mittels Flamm- bzw. Luftspritzen,
- Fig. 2a-f: Ausführungsbeispiele für Trägerschichten in einem Dreidimensionalen Strukturverbund,
- Fig. 3: schematisierte Darstellung zur Herstellung einer auf einem Substrat angebrachten Honigwabenstruktur und
- Fig. 4a-d: Herstellungsschritte für eine Trägerschicht mittels Sintertechnik.

### Wege zur Ausführung der Erfindung, gewerbliche Verwendbarkeit

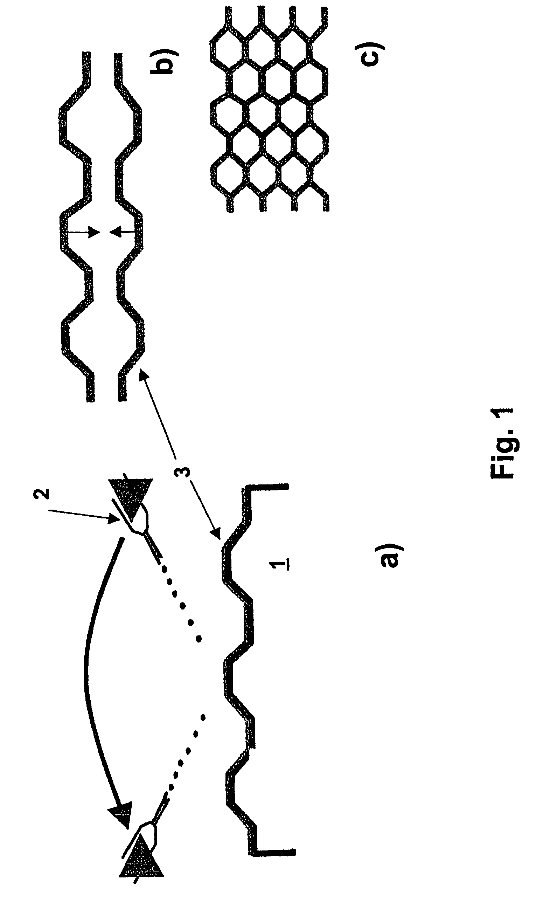

Zur Herstellung einer Honigwabenstruktur wird gemäß Fig. 1a eine Grundform 1 bereitgestellt, deren strukturierte Oberfläche die Halbform einer Honigwabenstruktur aufweist, auf der ein nachfolgender Beschichtungsvorgang erfolgt. Eine typische Oberflächengröße der Grundform 1 beträgt z.B. 500 x 500 mm, die beispielsweise unter einer Schutzgasatmosphäre mittels Flammspritzen beschichtet wird. Hierbei wird als zu beschichtendes Material, vorzugsweise oxidationsbeständiges MCrAIY, wie SV20 oder SV34, gewählt, das in Pulverform vorliegt, zur Schmelze gebracht und mittels einer Austragsdüse 2 zusammen mit einem heißen Gas- oder Luftstrahl bei Temperaturen zwischen 400 °C und 3000° C in Tröpfchenform auf die Oberfläche der Grundform 1 gerichtet wird. Hierbei schlägt sich das Material in Form einer die Oberfläche der Grundform 1 überziehenden Schicht 3 nieder.

Durch die Wahl der Beschichtungsparameter wie Auftragsgeschwindigkeit, Strahltemperatur, Tröpfchengröße etc. kann die Konsistenz der sich auf der Oberfläche der Grundform bildenden Schicht 3 individuell eingestellt werden. Die Parameter des Beschichtungsvorgangs werden vorzugsweise derart gewählt, dass eine erste Lage des Beschichtungsmaterials mit geringer Bindung zur Oberfläche der Grundform 1 abgeschieden wird. Die weiteren Lagen werden vorzugsweise in verschiedenen Konsistenzen gespritzt, hinsichtlich Porosität, Oxidationszustand usw.. Je nach Beschichtungsparameter können Trägerschichten mit nahezu beliebiger Pulver- bzw. Schichtkörnung hergestellt werden. Die Wahl der Schichtporosität spielt insbesondere bei der späteren Verwendung der Trägerschicht als Abriebelement am Deckband einer Gasturbinenschaufel eine entscheidende Rolle, zumal ein gezielter Abrieb der als Dichtelement eingesetzten Trägerschicht erwünscht ist. In diesem Zusammenhang eignen sich Trägerschichten am besten, bei denen die einzelnen Pulverteilchen wegen einer geringen Voroxidation keine zu feste metallurgische Bindung innerhalb der Trägerschicht eingehen. So lassen sich bei entsprechenden Abriebversuchen Partikel für Partikel aus der Trägerschicht abreiben.

Je nach Beschichtungsdauer kann eine nahezu beliebige Schichtdicke der sich auf der Grundform 1 abscheidenden Trägerschicht 3 eingestellt werden. Um die Schichtdicke, bezogen auf die gesamte Oberfläche der strukturierten Grundform 1, möglichst homogen auszubilden, ist die Sprühvorrichtung 2 gleichmäßig über die gesamte Oberfläche der Grundform 1 zu verschwenken (siehe Pfeildarstellung in Fig. 1a).

Nach entsprechendem Erkalten der abgeschiedenen Trägerschicht wird diese von der Oberfläche der Grundform 1 abgetrennt. Der Abtrennvorgang läßt sich beispielsweise durch Vorsehen einer entsprechenden Trennschicht zwischen der Trägerschicht und der Oberfläche der Grundform erleichtern. Mittels geeigneter Schneidtechniken, beispielsweise mittels Laser, Wasserstrahl, Erodieren, E-Strahl, Scheren etc., kann die Trägerschicht für die Weiterverarbeitung in eine dreidimensionale Honigwabenstruktur in geeignete Abmessungen zerteilt werden.

Anschließend wird eine Vielzahl vorstehend beschriebener Trägerschichten gemäß der in Fig. 1 b gezeigten Weise zusammengefügt und an ihren Berührflächen mittels Punktschweißen oder Lötverfahren fest miteinander verfügt werden. Dieser Vorgang wird entsprechend oft wiederholt, um eine dreidimensionale Honigwabenstruktur zu erhalten, deren Querschnitt ebenfalls in Fig. 1 c dargestellt ist.

Zur Herstellung der eingangs genannten Abriebelemente zur Anbringung an Gasturbinenschaufeldeckplatten werden beispielsweise aus der Trägerschicht eine Vielzahl strukturierter Trägerschichtstreifen mit Abmessungen von 12 × 50 mm geschnitten, wobei 12 mm der späteren Höhe der Honigwabenstruktur entspricht. Die Streifen werden stehend nebeneinander versetzt angeordnet, bis ebenfalls eine Breite von 50 mm entsteht. Nach entsprechend gegenseitiger fester Verfügung mittels Punktschweißen entsteht auf diese Weise ein Abriebelement, das für den Gasturbineneinsatz geeignet ist.

Trotz der dem verwendeten Material innewohnenden Sprödigkeit hat sich gezeigt, dass sich die Punktschweißtechnik zur Verbindung benachbarter strukturierter Trägerschichten nicht nachteilig auf die einzelnen Trägerschichten auswirkt.

Eine vorstehend hergestellte Honigwabenstruktur konnte erfolgreich als Abrieb- und Abdichtelement innerhalb einer Gasturbine bei Temperaturen von 1100° C über 1000 Betriebsstunden ohne sichtbare Schäden eingesetzt werden. Bei derartig hohen Temperaturen sind bereits alle bisher verwendeten konventionellen Materialien, die mit den eingangs erwähnten konventionellen Bearbeitungsmethoden verarbeitbar sind, durchoxidiert und nicht mehr funktionsfähig.

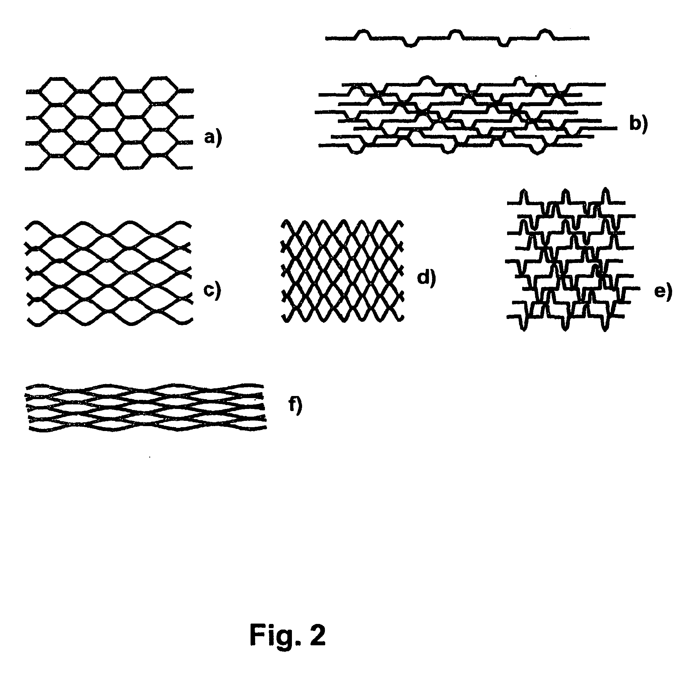

In den Fig. 2a bis f sind Querschnitte durch unterschiedliche dreidimensionale Schichtstrukturen zu entnehmen, die durch entsprechende Formgebung der Oberfläche der Grundform erhalten werden. Die Auswahl der in den Fig. 2a bis f gezeigten Querschnittsvarianten ist nicht abschließend und zeigt die Möglichkeit auf, im Querschnitt gleichmäßig und ungleichmäßig verteilte Trägerschichtkombinationen zu realisieren.

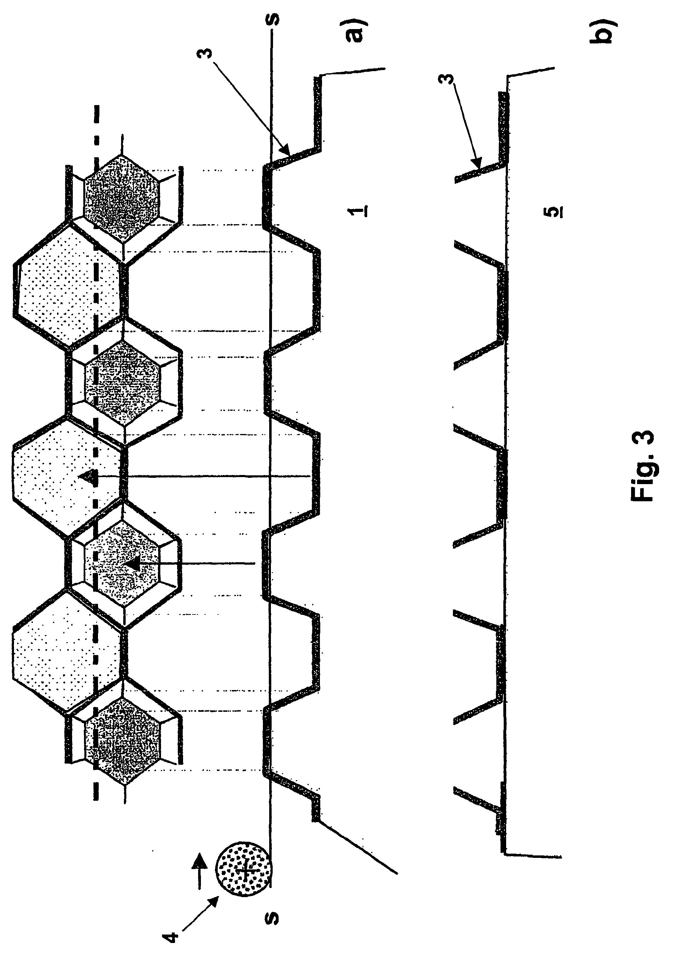

In Fig. 3a (untere Darstellung) ist eine Querschnittsdarstellung einer bereits auf einer Grundform 1 abgeschiedenen Trägerschicht 3 dargestellt. Die in Fig. 3a obere Darstellung zeigt eine Draufsicht der Trägerschicht 3. Neben der vorstehend beschriebenen Abscheidetechnik des Flammspritzens bzw. Luftspritzens ist es auch möglich, die Trägerschicht 3 auf die strukturierte Oberfläche der Grundform 1 mittels galvanischen Abscheiden aufzubringen. Desweiteren bieten sich als alternative Abscheidetechniken Sintern oder Brazecoating an, auf die im weiteren noch eingegangen wird.

Noch bevor die auf die Grundform 1 abgeschiedene Trägerschicht 3 von der Grundform getrennt wird, wird in einer Ausführungsvariante des Verfahrens ein Abschleifvorgang vorgesehen, durch den die oberen horizontal verlaufenden Schichtabschnitte der Trägerschicht abgetrennt werden (siehe hierzu Fig. 1a, untere Darstellung). Hierbei dient ein Fräskopf 4, der über die Trägerschicht 3 gefahren wird. Durch den Schleif- bzw.- Fräsvorgang werden die in Halbformen vorliegenden Honigwabenstrukturen einseitig geöffnet. Dies zur Folge hat, dass beim Zusammenfügen mit einer Trägerschicht in Halbhonigwabenform, beide Trägerschichten nur über eine einlagige gemeinsame Kontaktflächen miteinander verfügt sind.

In Fig. 3b ist eine vorstehend erläuterte halbgeöffnete Trägerschicht auf einem Substrat 5 mittels Lötverbindungen 6 fest verfügt. Das Substrat 6 kann beispielsweise die Oberfläche eines Deckbandes einer Turbinenschaufel sein, auf die eine in Fig. 3b nicht in der Gesamtheit dargestellte dreidimensionale Honigwabenstruktur aufgebracht ist.

Wie bereits vorstehend kurz hingewiesen gibt es alternative Materialabscheideverfahren, mit denen MCrAIY-Material auf einer strukturierten Oberfläche einer Grundform abgeschieden werden kann.

Im Falle der galvanischen Abscheidung wird die strukturierte Oberfläche der Grundform 1 als Kathode in ein galvanisches Bad eingebracht. Als Anode dienen Platten aus wechselnden Materialien z.B. in der Reihenfolge Nickel , Chrom, Aluminium , Yttrium, Nickel. Bei geeigneten Stromdichten und Zeiten wird so eine Schichtfolge aufgebaut, die in ihrer prozentualen Zusammensetzung der gewünschten MCrAIY-Legierung entspricht. Eine anschliessende Diffusionswärmebehandlung führt zu einer homogenen Durchmischung der Elemente. Eine zuvor auf der strukturierten Oberfläche der Grundform aufgebrachte Diffusionssperre verhindert das Ansintern dieser Oberfläche während des galvanischen Abscheidevorganges.

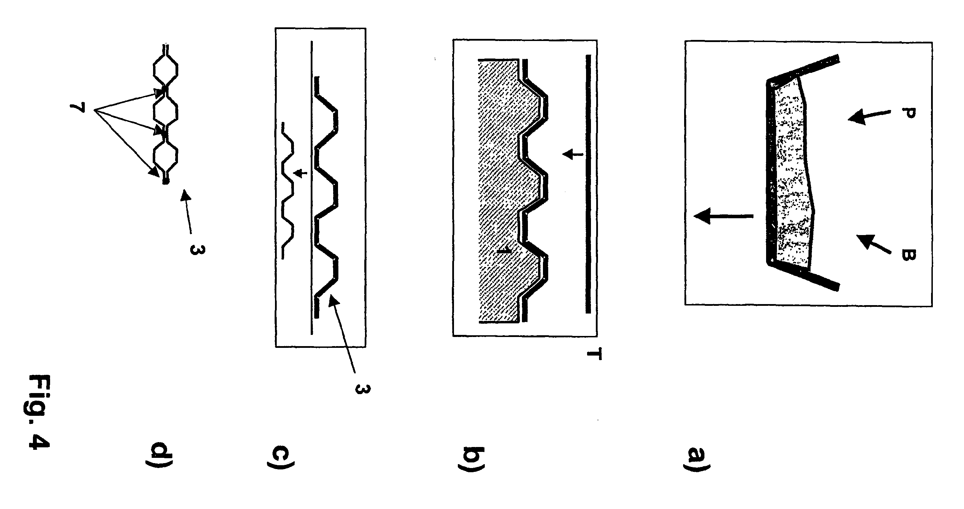

Auch ermöglicht die Sintertechnik die Herstellung der gewünschten Trägerschicht. In Figur 4a wird MCrAIY-Pulver P mit einem Binder B gemischt und zu einem flachen Band T geformt, z.B. 0.5 mm dick und 18 mm breit sogenanntes "Tape" (Fig. 4b). Dieses Tape T ist handhabbar und kann auf die Oberfläche der Grundform 1 gebracht werden und durch Anpressen dessen exakte Form, z.B. halbe Honigwabe, annehmen. Anschließend erfolgt ein Vorsintern in geeigneten Öfen und Thermozyklen, was dem Fachmann bekannt ist. Dabei entsteht eine erste metallurgische Verbindung zwischen den Pulverkörnern ohne dass eine nennenswerte Schrumpfung des geformten Tapes T eintritt. Dabei vergast der Binder. Im Anschluß daran wird der Vorsinterling auf einer Unterlage fertiggesintert, das heisst dicht gesintert. Dabei schrumpft das Teil volumenmässig etwa 30 - 35 % (Fig. 4c). Danach ist die Trägerschicht 3 für die Weiterverarbeitung bereit, z.B. zwei Trägerschichten 3 werden zusammen punktgeschweisst (Fig. 4d).

Schließlich stellt das Brazecoating eine weitere Alternative zur Herstellung der Trägerschicht dar. Hierbei wird MCrAIY-Pulver mit wenig Binder gemischt und auf die Grundform gebracht. Besonders vorteilhaft ist es wenn zwischen der Oberfläche der Grundform und dem MCrAIY-Pulver mit Binderzusatz eine Antihaftschicht z.B. eine oxidierte Oberfläche oder eine Keramik-Schicht gleichmässig aufgebracht ist. Danach wird die Grundform mit der aufgebrachten Schicht in einem geeigneten Ofen auf eine Temperatur zwischen Liquidus und Solidus des MCrAIY-Pulvers gebracht. Die Pulverschicht schmilzt / sintert in sich zusammen und bildet eine gleichmässige Schichtdicke, erkaltet zur Trägerschicht, die anschließend in der bereits beschriebenen Weise zusammengefügt werden kann.

Neben der bereits erwähnten Verwendung einer mit den vorstehend beschriebenen Verfahrenstechniken hergestellten dreidimensionalen Honigwabenstruktur als Abriebelement zwischen Deckband einer Laufschaufel und dem Statorgehäuse einer Gasturbine zur Reduzierung des Leckagespaltes, können derartige Strukturen auch als Hitzeschutzschilde (Heatshield) oder als Geräuschdämpfungselemente in der Turbinentechnik eingesetzt werden. In letzterer Anwendungsform werden die dreidimensionalen Strukturen im Austrittskanal von Turbinen, insbesondere von Strahltriebwerksturbinen angeordnet, um als akustisch aktive Strukturen entscheidend zur Lärmreduzierung beizutragen.

### Bezugszeichenliste

- 1: Grundform
- 2: Auftragdüse
- 3: Trägerschicht
- 4: Fräskopf
- 5: Substrat
- 6: Lötverbindung

## Patentansprüche

1. Verfahren zur Herstellung einer als Abriebelement ausgebildeten Struktur zur Reduzierung eines Leckagespaltes zwischen einer rotierenden Schaufelspitze und einem der Schaufelspitze unmittelbar gegenüberliegenden Statorgehäuse innerhalb einer Gasturbinenanlage, die aus einer räumlich geformten, folienartig ausgebildeten und aus sprödhartem Material bestehenden Trägerschicht (3) gebildet wird, umfassend folgende Verfahrensschritte:
- Bereitstellen einer Grundform (1) mit einer räumlich geformten Oberfläche,
- Abscheiden des in Gas- oder Flüssigphase vorliegenden sprödharten Materials auf der räumlich geformten Oberfläche, wobei als sprödhartes Material MCrAlY verwendet wird,
- Erstarren des auf der räumlich geformten Oberfläche abgeschiedenen Materials zu einer sprödharten Materialschicht (3) sowie
- Abtrennen der sprödharten Materialschicht (3) von der räumlich geformten Oberfläche zum Erhalt der aus sprödhartem Material bestehenden Trägerschicht (3), und
- Verfügen von wenigstens zwei aus sprödhartem Material bestehenden Trägerschichten (3) zur Ausbildung einer dreidimensionalen Struktur aus sprödhartem Material.

2. Verfahren nach Anspruch 1,
**dadurch gekennzeichnet, dass** der Abscheidevorgang mittels Thermischen Spritzen in Form von Flamm- oder Plasmaspritzen erfolgt, bei dem das abzuscheidende Material erhitzt und verflüssigt wird und mittels eines gasförmigen Trägerstromes auf die räumlich geformte Oberfläche abgeschieden wird, auf der sich das Material abkühlt und unter Ausbildung einer flächigen Schicht (3) erstarrt.

3. Verfahren nach Anspruch 1,
**dadurch gekennzeichnet, dass** das Abscheiden des in flüssiger Phase vorliegenden Materials auf die Oberfläche der Grundform im Rahmen eines Meltspinning-Prozesses erfolgt, bei dem die Grundform als rotierende Strukturwalze ausgebildet ist und durch eine Austragsdüse das verflüssigte Material in Form eines flächig aufgeweiteten Materialstrahl auf die gekühlte Oberfläche der Strukturwalze aufgetragen wird, wobei das verflüssigte Material erkaltet und erstarrt und in Form einer verfestigten strukturierten Trägerschicht von der Strukturwalze durch die Eigenrotation der Strukturwalze abgeschält wird.

4. Verfahren nach dem Oberbegriff des Anspruchs 1,
**gekennzeichnet durch** folgende Verfahrensschritte:
- Bereitstellen einer Grundform (1) mit einer räumlich geformten Oberfläche,
- Abscheiden des sprödharten Materials mittels galvanischem Abscheiden aus einem flüssigen Bad auf der räumlich geformten Oberfläche zum Erhalt einer sprödharten Materialschicht, wobei als sprödhartes Material MCrAlY verwendet wird,
sowie
- Abtrennen der sprödharten Materialschicht (3) von der räumlich geformten Oberfläche zum Erhalt der aus sprödhartem Material bestehenden Trägerschicht (3), und
- Verfügen von wenigstens zwei aus sprödhartem Material bestehenden Trägerschichten (3) zur Ausbildung einer dreidimensionalen Struktur aus sprödhartem Material.

5. Verfahren nach dem Oberbegriff des Anspruchs 1,
**gekennzeichnet durch** folgende Verfahrensschritte:
- Bereitstellen einer Grundform (1) mit einer räumlich geformten Oberfläche,
- Abscheiden des in pulver- oder viskoser Form vorliegenden sprödharten Materials auf der räumlich geformten Oberfläche, wobei als sprödhartes Material MCrAlY verwendet wird,
- Sintern oder Brazecoating des auf der räumlich geformten Oberfläche abgeschiedenen Materials zu einer sprödharten Materialschicht (3),
- Abtrennen der sprödharten Materialschicht (3) von der räumlich geformten Oberfläche zum Erhalt der aus sprödhartem Material bestehenden Trägerschicht (3),
- Verfügen von wenigstens zwei aus sprödhartem Material bestehenden Trägerschichten (3) zur Ausbildung einer dreidimensionalen Struktur aus sprödhartem Material.

6. Verfahren nach einem der Ansprüche 1 bis 5,
**dadurch gekennzeichnet, dass** die räumlich geformte Oberfläche eine Vielzahl gleichartig ausgebildeter Erhöhungen und/oder Vertiefungen in räumlich periodischer Wiederkehr aufweist.

7. Verfahren nach Anspruch 6,
**dadurch gekennzeichnet, dass** die Erhöhungen oder Vertiefungen jeweils Halbformen einer Honigwabenstruktur sind.

8. Verfahren nach Anspruch 7,
**dadurch gekennzeichnet, dass** die wenigstens zwei aus sprödhartem Material bestehenden Trägerschichten (3), die jeweils Halbformen einer Honigwabenstruktur aufweisen, derart zusammengefügt werden, dass eine räumliche Honigwabenstruktur erhalten wird.

9. Verfahren nach einem der Ansprüche 1 bis 8,
**dadurch gekennzeichnet, dass** das Verfügen der wenigstens beiden Trägerschichten mittels Löten oder Schweißen durchgeführt wird.

## Claims

1. Process for producing a structure formed as a wearing element to reduce the size of a leakage gap between a rotating blade or vane tip and a stator housing which lies directly opposite the blade or vane tip within a gas turbine installation, which structure is formed from a spatially shaped carrier layer (3) which is of foil-like design and consists of hard brittle material,
comprising the following process steps:
- providing a basic mold (1) having a spatially shaped surface,
- depositing the hard brittle material which is in the gas or liquid phase on the spatially shaped surface, MCrAlY being used as the hard brittle material,
- solidifying the material which has been deposited on the spatially shaped surface in order to form a hard brittle material layer (3), and
- separating the hard brittle material layer (3) from the spatially shaped surface in order to obtain the carrier layer (3) which consists of hard brittle material, and
- joining at least two carrier layers (3) which consist of hard brittle material to form a three-dimensional structure comprising hard brittle material.

2. Process according to claim 1, **characterized in that** the deposition operation is carried out by means of thermal spraying, in the form of flame or plasma spraying, during which the material which is to be deposited is heated and liquefied and is deposited on the spatially shaped surface by means of a gaseous carrier stream, and the material cools on the spatially shaped surface and solidifies to form a sheet-like layer (3).

3. Process according to claim 1, **characterized in that** the deposition of the material, which is in the liquid phase, on the surface of the basic mold takes place as part of a melt spinning process, in which the basic mold is designed as a rotating structured roller, and the liquefied material is applied to the cooled surface of the structured roller through a discharge nozzle in the form of a jet of material which is widened in sheet-like form, the liquefied material cooling and solidifying and being peeled off the structured roller as a result of the actual rotation of the structured roller in the form of a solidified, structured carrier layer.

4. Process according to the preamble of claim 1,
**characterized by** the following process steps:
- providing a basic mold (1) having a spatially shaped surface,
- depositing the hard brittle material by means of electrodeposition from a liquid bath on the spatially shaped surface in order to obtain a hard brittle material layer, MCrAlY being used as the hard brittle material,
and
- separating the hard brittle material layer (3) from the spatially shaped surface in order to obtain the carrier layer (3) which consists of hard brittle material, and
- joining at least two carrier layers (3) which consist of hard brittle material to form a three-dimensional structure comprising hard brittle material.

5. Process according to the preamble of claim 1,
**characterized by** the following process steps:
- providing a basic mold (1) having a spatially shaped surface,
- depositing the hard brittle material which is in powder or viscous form on the spatially shaped surface, MCrAlY being used as the hard brittle material,
- sintering or braze coating of the material which has been deposited on the spatially shaped surface to form a hard brittle material layer (3),
- separating the hard brittle material layer (3) from the spatially shaped surface in order to obtain the carrier layer (3) which consists of hard brittle material,
- joining at least two carrier layers (3) which consist of hard brittle material to form a three-dimensional structure comprising hard brittle material.

6. Process according to one of claims 1 to 5, **characterized in that** the spatially shaped surface has multiplicity of spatially periodically recurring elevations and/or depressions which are of identical design.

7. Process according to claim 6, **characterized in that** the elevations or depressions are in each case in the form of a half of a honeycomb structure.

8. Process according to claim 7, **characterized in that** the at least two carrier layers (3), which consist of hard brittle material and are in each case in the form of halves of a honeycomb structure, are joined together in such a manner that a spatial honeycomb structure is obtained.

9. Process according to one of claims 1 to 8, **characterized in that** the joining of the at least two carrier layers is carried out by means of soldering or welding.

## Revendications

1. Procédé de fabrication d'une structure configurée comme élément abrasif, pour la réduction de l'interstice de fuite entre la pointe d'une aube rotative et un boîtier de stator situé directement face à la pointe d'aube dans une installation de turbine à gaz, la structure étant formée d'une couche de support (3) façonnée spatialement, configurée en feuille et constituée d'un matériau dur et fragile,
lequel procédé comprend les étapes suivantes :
préparer une forme de base (1) dont la surface est façonnée spatialement,
déposer le matériau dur et fragile en phase gazeuse ou en phase liquide sur la surface façonnée spatialement en utilisant comme matériau dur et fragile le MCrAlY,
solidifier le matériau déposé sur la surface façonnée spatialement pour obtenir une couche (3) de matériau dur et fragile,
séparer la couche (3) de matériau dur et fragile de la surface façonnée spatialement pour obtenir une couche de support (3) constituée du matériau dur et fragile et
rejoindre au moins deux couches de support (3) constituées du matériau dur et fragile pour former une structure tridimensionnelle en matériau dur et fragile.

2. Procédé selon la revendication 1, **caractérisé en ce que** l'opération de dépôt s'effectue par pulvérisation thermique sous la forme d'une pulvérisation à la flamme ou au plasma, dans laquelle le matériau à déposer est chauffé et liquéfié et est déposé au moyen d'un écoulement porteur gazeux sur la surface façonnée spatialement, sur laquelle le matériau se refroidit et se solidifie en formant une couche de surface (3).

3. Procédé selon la revendication 1, **caractérisé en ce que** le dépôt du matériau en phase liquide sur la surface de la forme de base s'effectue dans le cadre d'une opération de centrifugation à l'état fondu dans lequel la forme de base est configurée sous la forme d'un cylindre rotatif structuré, le matériau liquéfié étant appliqué par une tuyère d'application sous la forme d'un jet étalé à plat de matériau sur la surface refroidie du cylindre structuré, le matériau liquéfié se refroidissant, se solidifiant et étant détaché du cylindre structuré sous la forme d'une couche de support structurée et solidifiée en utilisant la rotation propre du cylindre structuré.

4. Procédé selon le préambule de la revendication 1, **caractérisé par** les étapes suivantes:
préparer une forme de base (1) à surface façonnée spatialement,
déposer un matériau dur et fragile par dépôt galvanique dans un bain liquide sur la surface façonnée spatialement pour obtenir une couche de matériau dur et fragile, en utilisant comme matériau dur et fragile le MCrAlY,
solidifier le matériau déposé sur la surface façonnée spatialement pour obtenir une couche (3) de matériau dur et fragile,
séparer la couche (3) de matériau dur et fragile de la surface façonnée spatialement pour obtenir une couche de support (3) constituée du matériau dur et fragile et
rejoindre au moins deux couches de support (3) constituées du matériau dur et fragile pour former une structure tridimensionnelle en matériau dur et fragile.

5. Procédé selon le préambule de la revendication 1, **caractérisé par** les étapes suivantes:
préparer une forme de base (1) à surface façonnée spatialement,
déposer le matériau dur et fragile sous forme poudreuse ou visqueuse sur la surface façonnée spatialement en utilisant comme matériau dur et fragile le MCrAlY,
fritter ou revêtir par brasage le matériau déposé sur la surface façonnée spatialement pour obtenir une couche (3) de matériau dur et fragile,
séparer la couche (3) de matériau dur et fragile de la surface façonnée spatialement pour obtenir une couche de support (3) constituée du matériau dur et fragile et
rejoindre au moins deux couches de support (3) constituées du matériau dur et fragile pour former une structure tridimensionnelle en matériau dur et fragile.

6. Procédé selon l'une des revendications 1 à 5, **caractérisé en ce que** la surface façonnée spatialement présente une pluralité de reliefs et/ou de creux de configuration similaire dans une répétition spatiale périodique.

7. Procédé selon la revendication 6, **caractérisé en ce que** les reliefs ou les creux sont chacun la moitié d'une structure en nid d'abeilles.

8. Procédé selon la revendication 7, **caractérisé en ce que** les deux ou plusieurs couches de support (3) constituées d'un matériau dur et fragile, qui présentent chacune la forme de la moitié d'une structure en nid d'abeilles, sont assemblées de manière à obtenir une structure spatiale en nid d'abeilles.

9. Procédé selon l'une des revendications 1 à 8, **caractérisé en ce que** la jonction des deux ou plusieurs couches de support s'effectue par brasage ou soudage.
